# EUROPÄISCHE PATENTSCHRIFT

(11) **EP 3 553 306 B1**
(45) Veröffentlichungstag und Bekanntmachung des Hinweises auf die Patenterteilung: **10.08.2022**
(21) Anmeldenummer: 18166811.2
(22) Anmeldetag: 11.04.2018
(51) Int. Cl.: F03D 1/06

(54) **WINDENERGIEANLAGENROTORBLATT MIT EINEM VORTEX-GENERATOR**
WIND ENERGY TURBINE ENGINE BLADE WITH A VORTEX GENERATOR
PALE DE ROTOR D'UNE ÉOLIENNE POURVUE D'UN GÉNÉRATEUR DE VORTEX

(43) Veröffentlichungstag der Anmeldung: 16.10.2019
(73) Patentinhaber: Nordex Energy SE & Co. KG, 22419 Hamburg (DE)
(72) Erfinder: Doosttalab, Mehdi, 22850 Norderstedt (DE)
(74) Vertreter: Hauck Patentanwaltspartnerschaft mbB

(56) Entgegenhaltungen:
- EP-A1- 2 548 801
- EP-A1- 3 211 219
- WO-A1-2005/035978
- WO-A2-2009/080316

## Beschreibung

Die Erfindung betrifft ein Windenergieanlagenrotorblatt mit einer Längsrichtung, einer maximalen Profilsehnenlänge und einem Längsabschnitt, der eine Längsposition mit der maximalen Profilsehnenlänge einschließt und der eine Saugseite sowie einen an der Saugseite angeordneten Vortex-Generator mit einer Auslegungsanströmrichtung aufweist.

Windenergieanlagen wandeln die im Wind enthaltene Energie in eine Rotationsbewegung ihres Rotors um. Hierzu weist der Rotor mindestens ein Windenergieanlagenrotorblatt auf, dessen aerodynamisches Profil im Betrieb von der umgebenden Luft umströmt wird. Die Strömung verläuft dabei idealerweise in einer Profilebene von einer Profilnasenkante zur Profilendkante. Dadurch entsteht ein Auftrieb, der ein Drehmoment auf den Rotor bewirkt.

Insbesondere bei großen Anstellwinkeln kann es auf der Saugseite zu Strömungsablösungen und Verwirbelungen kommen, die den Auftrieb drastisch reduzieren und den Strömungswiderstand erhöhen. Als eine wirksame Gegenmaßnahme ist die Anordnung von Vortex-Generatoren auf der Saugseite des Windenergieanlagenrotorblatts bekannt. Diese werden in Strömungsrichtung vor einem Punkt angeordnet, an dem die Strömungsablösungen auftreten, und erzeugen Verwirbelungen der Grenzschicht.

Eine solche Verwendung von Vortex-Generatoren für ein Windenergieanlagenrotorblatt zeigt beispielhaft die Druckschrift EP 2 799 710B1. Dort sind in unterschiedlichen Längsabschnitten des Windenergieanlagenrotorblatts jeweils mehrere Vortex-Generatoren aneinandergereiht. Jeder Vortex-Generator weist eine Auslegungsanströmrichtung auf, die in Richtung einer Profilsehne ausgerichtet ist, also im rechten Winkel zur Längsrichtung des Rotorblatts.

Aus der Druckschrift EP 2 871 358 B1 ist eine Schablone bekannt geworden, mit der Vortex-Generatoren einfach an einem Windenergieanlagenrotorblatt in der vorgesehenen Weise angeordnet werden können.

Aufgrund der Rotationsbewegung des Rotors wirksam werdende Zentrifugalkräfte führen dazu, dass die Luftströmung insbesondere nahe der Blattwurzel nicht vollständig in der Profilebene verläuft, sondern dass Quer- oder Radialströmungen auftreten. Diese beeinträchtigen eine theoretisch ideale Umströmung des aerodynamischen Profils in der Profilebene.

Dieser Effekt ist in der Druckschrift WO 2005/035978 A1 beschrieben. Die Druckschrift schlägt vor, die Querströmungen durch von der Saugseite vorstehende, in der Profilebene angeordnete, flächige Elemente zu reduzieren. Derartige flächige Elemente werden auch als Grenzschichtzäune bezeichnet.

Aus der Druckschrift WO 2013/156479 A1 ist ein Windenergieanlagenrotorblatt mit Grenzschichtzäunen bekannt geworden, die von der Profilnasenkante zur Profilendkante in der Profilebene verlaufen. Die Grenzschichtzäune weisen gekrümmte oder abgewinkelte Abschnitte auf, die sich mit zunehmendem Abstand von der Oberfläche des Rotorblatts der Blattwurzel zuneigen. Dadurch sollen die Querströmungen besonders wirksam verhindert werden.

Aus der Druckschrift WO 2014/016326 A1 ist ein Windenergieanlagenrotorblatt mit Grenzschichtzäunen bekannt geworden, die in einem spitzen Winkel zur Profilebene von der Profilnasenkante zur Profilendkante verlaufen. Zwischen benachbarten Grenzschichtzäunen sollen sich verjüngende Kanäle ausgebildet sein, wodurch sich eine Geschwindigkeit der Strömung erhöhen soll. Dies soll Strömungsablösungen entgegenwirken und Querströmungen reduzieren.

Aus der Druckschrift WO 2015/073149 A1 ist ein Windenergieanlagenrotorblatt mit einem nahe der Blattwurzel an der Druckseite oder an der Saugseite angebrachten Anbauteil bekannt geworden. Das Anbauteil weist eine Reihe von benachbarten, jeweils in einer Profilebene verlaufenden Grenzschichtzäunen auf. An den vorderen Enden der Grenzschichtzäune sind Vortex-Generatoren angeordnet.

Aus der Druckschrift WO 2009/080316 A2 ist ein Windenergieanlagenrotorblatt bekannt geworden, auf dessen Saugseite aktiv verstellbare Vortex-Generatoren angeordnet sind. Die Vortex-Generatoren können ein- und ausgefahren werden und eine oszillierende Bewegung ausführen.

Aus der Druckschrift EP 2 548 801 A1 ist ein Windenergieanlagenrotorblatt mit den Merkmalen des Oberbegriffs des Anspruchs 1 bekannt geworden.

Davon ausgehend ist es die Aufgabe der Erfindung, ein Windenergieanlagenrotorblatt mit einer verbesserten aerodynamischen Leistungsfähigkeit zur Verfügung zu stellen.

Diese Aufgabe wird gelöst durch das Windenergieanlagenrotorblatt mit den Merkmalen des Anspruchs 1. Vorteilhafte Ausgestaltungen sind in den Unteransprüchen angegeben.

Das Windenergieanlagenrotorblatt hat eine Längsrichtung, eine maximale Profilsehnenlänge und einen Längsabschnitt, der eine Längsposition mit der maximalen Profilsehnenlänge einschließt und der eine Saugseite sowie einen an der Saugseite angeordneten Vortex-Generator mit einer Auslegungsanströmrichtung aufweist, wobei die Auslegungsanströmrichtung in einem von 90° abweichenden Winkel zu der Längsrichtung ausgerichtet ist.

Das Windenergieanlagenrotorblatt weist eine Blattwurzel und eine Blattspitze auf. Im Bereich der Blattwurzel kann das Windenergieanlagenrotorblatt einen kreiszylindrischen oder annähernd kreiszylindrischen Abschnitt aufweisen. Über einen Großteil der Länge des Windenergieanlagenrotorblatts weist der Querschnitt des Windenergieanlagenrotorblatts ein aerodynamisches Profil auf, das zur Blattwurzel hin in den kreiszylindrischen oder annähernd kreiszylindrischen Abschnitt übergehen kann. Die Profilsehnenlänge des Windenergieanlagenrotorblatts entspricht an der Blattwurzel gegebenenfalls dem Durchmesser des kreiszylindrischen oder annähernd kreiszylindrischen Abschnitts. In Richtung zur Blattspitze hin vergrößert sich die Profilsehnenlänge, bis sie an einer bestimmten Längsposition einen maximalen Wert annimmt. Diese maximale Profilsehnenlänge kann ausschließlich an der bestimmten Längsposition vorliegen, oder über einen an dieser Längsposition beginnenden Abschnitt hinweg. Weiter zur Blattspitze hin verringert sich die Profilsehnenlänge wieder, bis sie an der Blattspitze einen minimalen Wert annimmt bzw. bei spitz auslaufendem Blatt Null wird.

Das Windenergieanlagenrotorblatt hat eine Druckseite und eine Saugseite, die an einer Profilendkante zusammenlaufen. Die in der jeweiligen Profilebene am weitesten von der Profilendkante entfernten Punkte bilden die Profilnasenkante. Die Profilsehne erstreckt sich jeweils in einer Profilebene von der Profilnasenkante zur Profilendkante. Die Längsrichtung des Windenergieanlagenrotorblatts erstreckt sich von der Blattwurzel zur Blattspitze, wobei sie nicht notwendigerweise exakt mit der Längsachse oder Pitchachse des Windenergieanlagenrotorblatts zusammenfällt und unter Umständen einen gekrümmten Verlauf aufweisen kann, insbesondere falls das Windenergieanlagenrotorblatt eine Vorbiegung und/oder eine Pfeilung aufweist. Die Profilebene ist an jeder Längsposition des Windenergieanlagenrotorblatts orthogonal zur Längsrichtung angeordnet.

An der Saugseite des Windenergieanlagenrotorblatts ist ein Vortex-Generator angeordnet, der eine Auslegungsanströmrichtung aufweist. Die Auslegungsanströmrichtung ist diejenige Richtung, aus der der Vortex-Generator im Betrieb des Windenergieanlagenrotorblatts angeströmt werden soll, um die beabsichtigte Verwirbelung zu erzeugen. Hierzu weist der Vortex-Generator mindestens eine aerodynamisch wirksame Fläche auf, die in einem Winkel zu der Auslegungsanströmrichtung angeordnet ist. Die Auslegungsanströmrichtung ist durch die Geometrie des Vortex-Generators vorgegeben. Insbesondere kann sie einer Längsrichtung und/oder einer Symmetrieachse des Vortex-Generators entsprechen. Die mindestens eine aerodynamisch wirksame Fläche des Vortex-Generators kann in einer im Wesentlichen senkrecht zur Saugseite verlaufenden Ebene angeordnet sein. Der Vortex-Generator kann einen Befestigungsabschnitt aufweisen, insbesondere mit einer Klebefläche, die mit der Saugseite des Windenergieanlagenrotorblatts verklebt ist.

Die Erfindung beruht auf der Erkenntnis, dass die bei einem Windenergieanlagenrotorblatt auftretenden Radialströmungen anders als zumeist angenommen einen positiven Einfluss auf die aerodynamische Leistungsfähigkeit ausüben können. Der Erfinder hat erkannt, dass insbesondere in einem inneren Längsabschnitt des Windenergieanlagenrotorblatts die von den Zentrifugalkräften ausgelöste Radialströmung in Richtung zur Blattspitze hin zur Ausbildung einer dünneren Grenzschicht führt und dass Corioliskräfte die Radialströmung teilweise in Richtung zur Profilendkante hin ablenken. Hierdurch treten Druckdifferenzen auf, die Strömungsablösungen entgegenwirken. Um diese positiven Wirkungen optimal nutzen zu können, hat es sich als vorteilhaft erwiesen, die auftretenden Radialströmungen gezielt zu stabilisieren. Anderenfalls kommt es insbesondere in Bereichen, in denen sich die Querschnittsgeometrie des Windenergieanlagenrotorblatts in Längsrichtung des Windenergieanlagenrotorblatts relativ schnell ändert, zu Instabilitäten und Störungen der Radialströmung und in der Folge unter Umständen zu großflächigen und/oder vorzeitigen Strömungsablösungen, die den Auftrieb mindern und den Strömungswiderstand erhöhen.

Bei der Erfindung wird in einem Längsabschnitt, der die Längsposition mit der maximalen Profilsehne einschließt, ein Vortex-Generator zur Stabilisierung der Radialströmung eingesetzt. Hierfür wird der Vortex-Generator so ausgerichtet, dass seine Auslegungsanströmrichtung in einem von 90° abweichenden Winkel zu der Längsrichtung, also nicht in der Profilebene, angeordnet ist. Mit anderen Worten wird der Vortex-Generator mit seiner Auslegungsanströmrichtung ein Stück weit aus der Profilebene heraus gedreht angeordnet, wobei ein vorderes, von der Luft zuerst angeströmtes Ende des Vortex-Generators in Richtung zu der Blattwurzel weist. Im Idealfall ist die Auslegungsanströmrichtung exakt in Richtung der auftretenden Radialströmung angeordnet.

In einer Ausgestaltung liegt der Winkel zwischen der Auslegungsanströmrichtung und der Längsrichtung im Bereich von -60° bis 60°. Die Ausrichtung des Vortex-Generators weicht also um mindestens 30° von der Profilebene ab.

In einer Ausgestaltung liegt die Auslegungsanströmrichtung in einer Ebene, die den Vortex-Generator und eine Pitchachse des Windenergieanlagenrotorblatts einschließt. In diesem Fall kann das vordere Ende des Vortex-Generators exakt der Blattwurzel zugewandt sein. Diese Anordnung ist besonders wirksam, wenn die Radialströmung genau in Längsrichtung, also von der Blattwurzel zur Blattspitze hin, auftritt.

In einer Ausgestaltung bildet sich im Betrieb des Windenergieanlagenrotorblatts bei Nenndrehzahl und Nennwindgeschwindigkeit im Bereich des Vortex-Generators eine radiale Grenzschichtströmung in der Auslegungsanströmrichtung aus. Der Vortex-Generator ist so angeordnet, dass seine Auslegungsanströmrichtung bei Nennbedingungen an die Richtung der Radialströmungen angepasst ist.

In einer Ausgestaltung weist der Vortex-Generator in der Auslegungsanströmrichtung eine Länge von maximal 15 % der maximalen Profilsehnenlänge auf. Die Länge des Vortex-Generators kann auch maximal 10 %, maximal 5 % oder nur maximal 3 % der maximalen Profilsehnenlänge betragen. Dadurch unterscheidet sich der Vortex-Generator von den aus dem Stand der Technik bekannten Grenzschichtzäunen, die sich in der Regel über die gesamte Profiltiefe erstrecken, um eine Wirkung zu erzielen. Natürlich unterscheidet sich der Vortex-Generator überdies auch hinsichtlich seiner Wirkung grundsätzlich von einem Grenzschichtzaun, da er die auftretenden Radialströmungen stabilisiert, anstatt sie so gut wie möglich zu verhindern.

In einer Ausgestaltung weist der Vortex-Generator eine Höhe auf, die einer Dicke einer radialen Grenzschichtströmung entspricht. Insbesondere kann es von Vorteil sein, wenn die Höhe des Vortex-Generators die Dicke der radialen Grenzschichtströmung nicht überschreitet oder jedenfalls nicht wesentlich größer ist. Durch diese relativ geringe Höhe des Vortex-Generators wird vermieden, dass ein oberes Ende des Vortex-Generators aus der radialen Grenzschichtströmung herausragt und die oberhalb der Grenzschicht im Wesentlichen in der Profilebene verlaufende Strömung stört. Dies ist bei der von der Profilebene abweichenden Anordnung der Auslegungsanströmrichtung des Vortex-Generators besonders wichtig.

In einer Ausgestaltung weist der Vortex-Generator zwei spiegelsymmetrisch zu der Auslegungsanströmrichtung angeordnete Finnen auf. Die beiden Finnen können im Wesentlichen senkrecht zu der Saugseite angeordnet sein. Sie können in einem Winkel zur Auslegungsanströmrichtung im Bereich von beispielsweise 5° bis 30° angeordnet sein, wobei ihre vorderen, zuerst von der Strömung erfassten Enden in einem geringeren Abstand voneinander angeordnet sein können, als ihre hinteren Enden oder umgekehrt.

In einer Ausgestaltung weist das Windenergieanlagenrotorblatt in dem Längsabschnitt eine dünne Hinterkante auf. Die dünne Hinterkante kann fertigungsbedingt eine Höhe von wenigen Millimetern aufweisen. Bei Windenergieanlagenrotorblättern mit einer solchen Hinterkante treten in der Regel ausgeprägte Radialströmungen auf, deren Stabilisierung in besonderer Weise wünschenswert ist.

In einer Ausgestaltung weist der Längsabschnitt eine Länge auf, die maximal 20% einer Gesamtlänge des Windenergieanlagenrotorblatts beträgt. Insbesondere kann die Länge des Längsabschnitts auch nur maximal 15 %, maximal 10 % oder maximal 5 % der Gesamtlänge des Windenergieanlagenrotorblatts betragen. Der Vortex-Generator also relativ nahe an der Längsposition mit der maximalen Profilsehnenlänge angeordnet und damit in einem Bereich, in dem sich die Länge der Profilsehne relativ stark geändert. In diesem Bereich ist eine Stabilisierung der Radialströmung besonders wichtig.

Bei der Erfindung beginnt der Längsabschnitt an der Längsposition mit der maximalen Profilsehnenlänge und erstreckt sich von dort in Richtung zu einer Blattwurzel des Windenergieanlagenrotorblatts hin. Der Vortex-Generator ist also in Richtung der Radialströmung vor der Längsposition mit der maximalen Profilsehnenlänge angeordnet und kann dadurch Turbulenzen in der radial strömenden Grenzschicht erzeugen, bevor es bei abnehmender Länge der Profilsehne zu Strömungsablösungen kommt.

In einer Ausgestaltung ist der Vortex-Generator an der Längsposition mit der maximalen Profilsehnenlänge angeordnet. In vielen Fällen ist eine Anordnung des Vortex-Generators an dieser Längsposition für die angestrebte Wirkung optimal.

In einer Ausgestaltung weist der Längsabschnitt im Bereich des Vortex-Generators ein aerodynamisches Profil auf und der Vortex-Generator ist in Richtung der Profilsehne zwischen einer Profilendkante und einer Profilsehnenposition, an der das aerodynamische Profil eine maximale Profildicke aufweist, angeordnet. Strömungsablösungen treten in der Regel hinter der Profilsehnenposition mit maximaler Profildicke auf. Eine Stabilisierung der Radialströmung in diesem Bereich ist daher besonders sinnvoll.

In einer Ausgestaltung weist das Windenergieanlagenrotorblatt mehrere Vortex-Generatoren auf, die jeweils gemäß einem der vorstehenden Ansprüche angeordnet sind. Insbesondere können die mehreren Vortex-Generatoren in gleichmäßigen Abständen voneinander angeordnet sein. Dadurch gelingt es, die Radialströmung nicht nur punktuell, sondern in einem größeren, von den mehreren Vortex-Generatoren abgedeckten Bereich zu stabilisieren.

In einer Ausgestaltung sind die Vortex-Generatoren entlang einer Linie angeordnet, die senkrecht zu den jeweiligen Auslegungsanströmrichtungen verläuft. Die Linie kann gekrümmt oder geradlinig sein. Sie kreuzt die Radialströmung bevorzugt an einer Position, die in Strömungsrichtung vor zu erwartenden Strömungsablösungen angeordnet ist.

In einer Ausgestaltung verläuft die Linie entlang einer Profilebene des Windenergieanlagenrotorblatts. Diese Anordnung erscheint besonders zweckmäßig.

Nachfolgend wird die Erfindung anhand eines in Figuren dargestellten Ausführungsbeispiels näher erläutert. Es zeigen:
- Fig. 1: ein Windenergieanlagenrotorblatt in einer schematischen, perspektivischen Ansicht,
- Fig. 2: eine Draufsicht auf die Saugseite eines Längsabschnitts des Windenergieanlagenrotorblatts aus Fig. 1 in einer schematischen Darstellung,
- Fig. 3: einen Querschnitt durch den Längsabschnitt aus Fig. 2 entlang einer Profilebene, ebenfalls in einer schematischen Darstellung,
- Fig. 4: eine Draufsicht auf die Saugseite eines Längsabschnitts eines Windenergieanlagenrotorblatts entsprechend einer zweiten Ausgestaltung,
- Fig. 5: eine Draufsicht auf die Saugseite eines Längsabschnitts eines Windenergieanlagenrotorblatts entsprechend einer weiteren Ausgestaltung

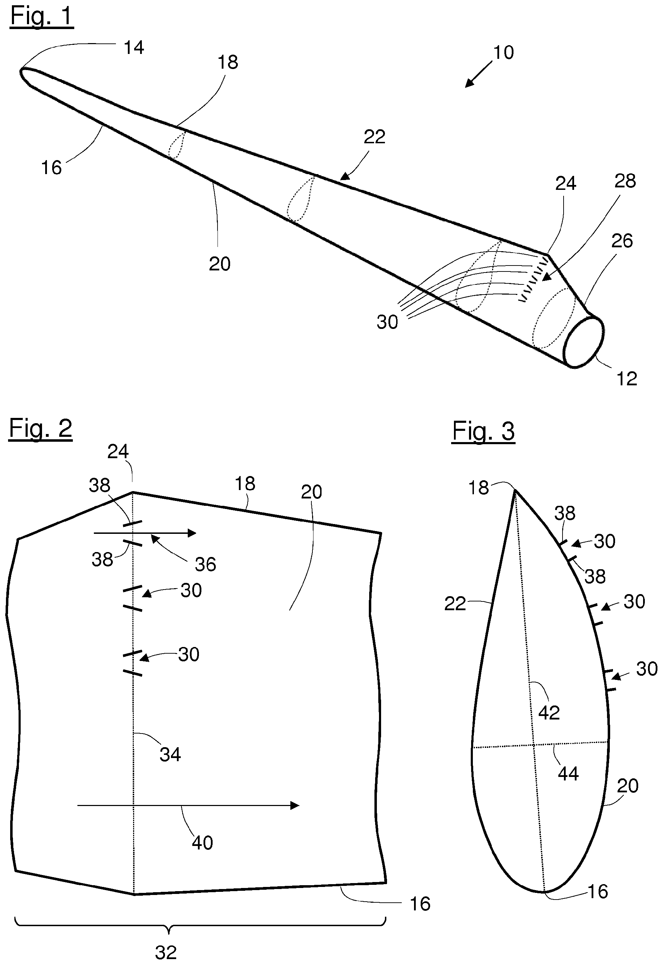

Das Windenergieanlagenrotorblatt 10 aus Fig. 1 hat eine Blattwurzel 12, eine Blattspitze 14, eine Profilnasenkante 16, eine Profilendkante 18, eine dem Betrachter zugewandte Saugseite 20 sowie eine vom Betrachter abgewandte Druckseite 22. An einer Längsposition 24 weist das Windenergieanlagenrotorblatt 10 eine maximale Profilsehnenlänge auf. Ein an der Blattwurzel 12 angeordneter Abschnitt 26 ist kreiszylindrisch ausgebildet. Der kreisförmige Querschnitt dieses Abschnitts 26 geht bis spätestens zu der Längsposition 24 mit der maximalen Profilsehnenlänge in ein aerodynamisches Profil über, dass sich bis zur Blattspitze 14 fortsetzt, wie durch die punktiert eingezeichneten Profilebenen dargestellt. In einer Reihe 28 auf der Saugseite 20, die an der Längsposition 24 entlang der Profilebene verläuft, befinden sich mehrere Vortex-Generatoren 30.

Einzelheiten sind in der Fig. 2 besser erkennbar. Dort ist der Blick auf die Saugseite 20 eines Längsabschnitts 32 des Windenergieanlagenrotorblatts 10 gerichtet, der die Längsposition 24 mit der maximalen Profilsehnenlänge einschließt. Die Profilnasenkante 16 und die Profilendkante 18 sind ebenso erkennbar, wie dass sich die Länge der Profilsehne von der Längsposition 24 ausgehend sowohl in Richtung zu der Blattwurzel 12 hin (in der Fig. 2 nach links) als auch in Richtung zu der Blattspitze 14 hin (in der Fig. 2 nach rechts) verringert.

Drei Vortex-Generatoren 30 sind exemplarisch entlang der Profilebene 34 aneinandergereiht. An dem in der Fig. 2 am weitesten oben dargestellten Vortex-Generator 30 ist beispielhaft die Auslegungsanströmrichtung 36 durch einen Pfeil gekennzeichnet. Jeder der Vortex-Generatoren 30 weist zwei spiegelsymmetrisch zu der Auslegungsanströmrichtung 36 angeordnete Finnen 38 auf, deren vordere Enden in einem geringeren Abstand voneinander angeordnet sind als deren hintere Enden. Die Auslegungsanströmrichtung 36 fällt im Beispiel mit der Längsrichtung 40 des Windenergieanlagenrotorblatts 10 zusammen. Der Winkel zwischen der Auslegungsanströmrichtung 36 und der Längsrichtung 40 beträgt also 0° und weicht somit von 90° ab.

Figur 3 zeigt einen Querschnitt entlang der in Figur 2 eingezeichneten Profilebene 34. Man erkennt dort die Profilsehnenlänge 42, die ihren maximalen Wert aufweist.

Ebenfalls eingezeichnet ist die Profildicke 44, die dem Durchmesser des größten Kreises entspricht, der zwischen der Saugseite 20 und der Druckseite 22 eingezeichnet werden kann. Man erkennt an der Profilendkante 18, dass das aerodynamische Profil eine dünne Hinterkante aufweist. Alle Vortex-Generatoren 30 sind zwischen der Profilendkante 18 und einer Profilsehnenposition angeordnet, an der das Profil seine maximale Profildicke 44 aufweist.

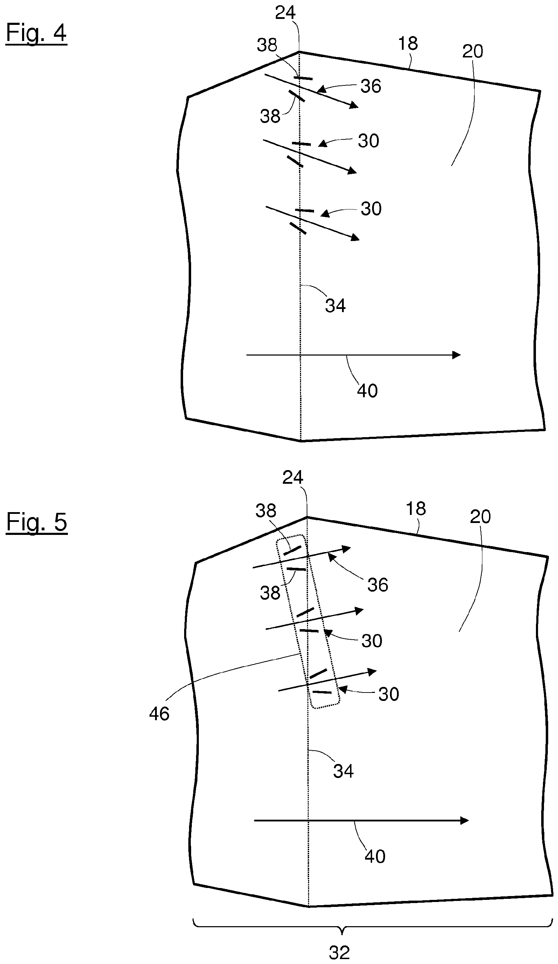

Die Figuren 4 und 5 zeigen zwei weitere Ausgestaltungen des erfindungsgemäßen Windenergieanlagenrotorblatts. In den gezeigten Beispielen weicht die radiale Grenzschichtströmung bei Nenndrehzahl und Nennwindgeschwindigkeit um einige Grad von der Längsrichtung (40) des Rotorblatts ab. In Fig. 4 sind die Vortex-Generatoren (30) in dem Längsabschnitt (32) an der gleichen Längsposition (24) angeordnet und jeder einzelne Vortex-Generator (30) wurde so ausgerichtet, dass die Auslegungsanströmrichtung (36) parallel zur Grenzschichtströmung verläuft.

In Fig. 5 sind die einzelnen Vortex-Generatoren auf einer gemeinsamen Grundplatte (46) befestigt. Die Grundplatte (46) ist in dem Längsabschnitt (32) in einem Winkel zur Profilebene (34) angeordnet. Die Vortex-Generatoren (30) befinden sich somit an verschiedenen Längspositionen (24). Auch hier erfolgt die Ausrichtung der Vortex-Generatoren (30) so, dass die Auslegungsanströmrichtung (36) parallel zur Grenzschichtströmung verläuft.

### Liste der Bezugszeichen:

- 10: Windenergieanlagenrotorblatt
- 12: Blattwurzel
- 14: Blattspitze
- 16: Profilnasenkante
- 18: Profilendkante
- 20: Saugseite
- 22: Druckseite
- 24: Längsposition
- 26: kreiszylindrischer Abschnitt
- 28: Reihe
- 30: Vortex-Generator
- 32: Längsabschnitt
- 34: Profilebene
- 36: Auslegungsanströmrichtung
- 38: Finne
- 40: Längsrichtung
- 42: Profilsehne
- 44: Profildicke
- 46: Grundplatte

## Patentansprüche

1. Windenergieanlagenrotorblatt (10) mit einer Blattwurzel (12), einer Längsrichtung (40), einer maximalen Profilsehnenlänge und einem Längsabschnitt (32), der an einer Längsposition (24) mit der maximalen Profilsehnenlänge beginnt und sich von dort in Richtung zu der Blattwurzel (12) hin erstreckt und der eine Saugseite (20) sowie einen an der Saugseite (20) angeordneten Vortex-Generator (30) mit einer Auslegungsanströmrichtung (36) aufweist, wobei die Auslegungsanströmrichtung (36) in einem von 90° abweichenden Winkel zu der Längsrichtung (40) ausgerichtet ist, **dadurch gekennzeichnet, dass** ein vorderes, von der Luft zuerst angeströmtes Ende des Vortex-Generators (30) in Richtung zu der Blattwurzel (12) hin weist.

2. Windenergieanlagenrotorblatt (10) nach Anspruch 1, **dadurch gekennzeichnet, dass** der Winkel zwischen der Auslegungsanströmrichtung (36) und der Längsrichtung (40) im Bereich von -60° bis 60° liegt.

3. Windenergieanlagenrotorblatt (10) nach Anspruch 1 oder 2, **dadurch gekennzeichnet, dass** die Auslegungsanströmrichtung (36) in einer Ebene liegt, die den Vortex-Generator (30) und eine Pitchachse des Windenergieanlagenrotorblatts (10) einschließt.

4. Windenergieanlagenrotorblatt (10) nach einem der Ansprüche 1 bis 3, **dadurch gekennzeichnet, dass** der Vortex-Generator (30) so angeordnet ist, dass seine Auslegungsanströmrichtung (36) im Betrieb des Windenergieanlagenrotorblatts (10) bei Nenndrehzahl und Nennwindgeschwindigkeit an eine radiale Grenzschichtströmung im Bereich des Vortex-Generators angepasst ist.

5. Windenergieanlagenrotorblatt (10) nach einem der Ansprüche 1 bis 4, **dadurch gekennzeichnet, dass** der Vortex-Generator (30) in der Auslegungsanströmrichtung (36) eine Länge von maximal 15 % der maximalen Profilsehnenlänge aufweist.

6. Windenergieanlagenrotorblatt (10) nach einem der Ansprüche 1 bis 5, **dadurch gekennzeichnet, dass** der Vortex-Generator (30) eine Höhe aufweist, die einer Dicke einer radialen Grenzschichtströmung entspricht.

7. Windenergieanlagenrotorblatt (10) nach einem der Ansprüche 1 bis 6, **dadurch gekennzeichnet, dass** der Vortex-Generator (30) zwei spiegelsymmetrisch zu der Auslegungsanströmrichtung (36) angeordnete Finnen (38) aufweist.

8. Windenergieanlagenrotorblatt (10) nach einem der Ansprüche 1 bis 7, **dadurch gekennzeichnet, dass** das Windenergieanlagenrotorblatt (10) in dem Längsabschnitt (32) eine dünne Hinterkante aufweist.

9. Windenergieanlagenrotorblatt (10) nach einem der Ansprüche 1 bis 8, **dadurch gekennzeichnet, dass** der Längsabschnitt (32) eine Länge aufweist, die maximal 20% einer Gesamtlänge des Windenergieanlagenrotorblatts (10) beträgt.

10. Windenergieanlagenrotorblatt (10) nach einem der Ansprüche 1 bis 9, **dadurch gekennzeichnet, dass** der Vortex-Generator (30) an der Längsposition (24) mit der maximalen Profilsehnenlänge angeordnet ist.

11. Windenergieanlagenrotorblatt (10) nach einem der Ansprüche 1 bis 10, **dadurch gekennzeichnet, dass** der Längsabschnitt (32) im Bereich des Vortex-Generators (30) ein aerodynamisches Profil aufweist und der Vortex-Generator (30) in Richtung der Profilsehne 42 zwischen einer Profilendkante (18) und einer Profilsehnenposition, an der das aerodynamische Profil eine maximale Profildicke (44) aufweist, angeordnet ist.

12. Windenergieanlagenrotorblatt (10) nach einem der Ansprüche 1 bis 11, **dadurch gekennzeichnet, dass** das Windenergieanlagenrotorblatt (10) mehrere Vortex-Generatoren (30) aufweist, die jeweils gemäß einem der vorstehenden Ansprüche angeordnet sind.

13. Windenergieanlagenrotorblatt (10) nach Anspruch 12, **dadurch gekennzeichnet, dass** die Vortex-Generatoren (30) entlang einer Linie angeordnet sind, die senkrecht zu den jeweiligen Auslegungsanströmrichtungen (36) verläuft.

14. Windenergieanlagenrotorblatt (10) nach Anspruch 13, **dadurch gekennzeichnet, dass** die Linie entlang einer Profilebene (34) des Windenergieanlagenrotorblatts (10) verläuft.

## Claims

1. Wind turbine rotor blade (10) with a longitudinal direction (40), a maximum profile chord length and a longitudinal section (32), which begins at a longitudinal position (24) with the maximum profile chord length and extends from there in the direction of the blade root (12) and which has a suction side (20) and a vortex generator (30) being arranged on the suction side (20) and having a design flow direction (36), wherein the design flow direction (36) is aligned at an angle different from 90° to the longitudinal direction (40), **characterized in that** a front end of the vortex generator (30) being first exposed to the air flow points in the direction to the blade root (12).

2. Wind turbine rotor blade (10) according to claim 1, **characterized in that** the angle between the design flow direction (36) and the longitudinal direction (40) is in the range of -60 ° to 60 °.

3. Wind turbine rotor blade (10) according to claim 1 or 2, **characterized in that** the design flow direction (36) is in a plane that includes the vortex generator (30) and a pitch axis of the wind turbine rotor blade (10).

4. Wind turbine rotor blade (10) according to any one of claims 1 to 3, **characterized in that** the vortex generator (30) is arranged in such a way that its design flow direction (36) in the operation of the wind turbine rotor blade (10) at rated rotation speed and rated wind speed is adapted to a radial boundary layer flow in the area of the vortex generator.

5. Wind turbine rotor blade (10) according to any one of claims 1 to 4, **characterized in that** the vortex generator (30) in the design flow direction (36) has a maximum length of 15% of the maximum profile chord length.

6. Wind turbine rotor blade (10) according to any one of claims 1 to 5, **characterized in that** the vortex generator (30) has a height corresponding to a thickness of a radial boundary layer flow.

7. Wind turbine rotor blade (10) according to any one of claims 1 to 6, **characterized in that** the vortex generator (30) has two fins (38) mirror-symmetrically arranged to the design flow direction (36).

8. Wind turbine rotor blade (10) according to any one of claims 1 to 7, **characterized in that** the wind turbine rotor blade (10) has a thin trailing edge in the longitudinal section (32).

9. Wind turbine rotor blade (10) according to any one of claims 1 to 8, **characterized in that** the longitudinal section (32) has a maximum length of 20% of a total length of the wind turbine rotor blade (10).

10. Wind turbine rotor blade (10) according to any one of claims 1 to 9, **characterized in that** the vortex generator (30) is arranged at the longitudinal position (24) with the maximum profile chord length.

11. Wind turbine rotor blade (10) according to any one of claims 1 to 11, **characterized in that** the longitudinal section (32) in the area of the vortex generator (30) has an aerodynamic profile and the vortex generator (30) is arranged in the direction of the profile chord (42) between a profile trailing edge (18) and a profile chord position at which the aerodynamic profile has a maximum profile thickness (44).

12. Wind turbine rotor blade (10) according to any one of claims 1 to 11, **characterized in that** the wind turbine rotor blade (10) has several vortex generators (30), each of which is arranged according to one of the preceding claims.

13. Wind turbine rotor blade (10) according to claim 12, **characterized in that** the vortex generators (30) are arranged along a line that runs perpendicular to the respective design flow directions (36).

14. Wind turbine rotor blade (10) according to claim 13, **characterized in that** the line runs along a profile plane (34) of the wind turbine rotor blade (10).

## Revendications

1. Pale de rotor d'éolienne (10) pourvue d'un pied de pale (12), d'une direction longitudinale (40), d'une longueur de corde maximale et d'une section longitudinale (32), laquelle commence au niveau d'une position longitudinale (24) avec la longueur de corde maximale, d'où elle s'étend vers le pied de pale (12), et laquelle présente un côté aspiration (20) ainsi qu'un générateur de vortex (30) disposé sur le côté aspiration (20) avec une direction d'écoulement de conception (36), dans laquelle la direction d'écoulement de conception (36) est orientée selon un angle s'écartant de 90° par rapport à la direction longitudinale (40), **caractérisée en ce qu'**une extrémité avant du générateur de vortex (30) recevant l'air en premier est dirigée vers le pied de pale (12).

2. Pale de rotor d'éolienne (10) selon la revendication 1, **caractérisée en ce que** l'angle entre la direction d'écoulement de conception (36) et la direction longitudinale (40) est compris dans la plage de -60° à 60°.

3. Pale de rotor d'éolienne (10) selon la revendication 1 ou 2, **caractérisée en ce que** la direction d'écoulement de conception (36) s'étend dans un plan incluant le générateur de vortex (30) et un axe de pas de la pale de rotor d'éolienne (10).

4. Pale de rotor d'éolienne (10) selon l'une des revendications 1 à 3, **caractérisée en ce que** le générateur de vortex (30) est disposé de telle façon que pendant le fonctionnement de la pale de rotor d'éolienne (10), sa direction d'écoulement de conception (36) est adaptée à un écoulement de couche limite radial dans la région du générateur de vortex en présence d'une vitesse de rotation nominale et d'une vitesse de vent nominale.

5. Pale de rotor d'éolienne (10) selon l'une des revendications 1 à 4, **caractérisée en ce que** dans la direction d'écoulement de conception (36), le générateur de vortex (30) présente une longueur de maximum 15% de la longueur de corde maximale.

6. Pale de rotor d'éolienne (10) selon l'une des revendications 1 à 5, **caractérisée en ce que** le générateur de vortex (30) présente une hauteur correspondant à une épaisseur d'un écoulement de couche limite radial.

7. Pale de rotor d'éolienne (10) selon l'une des revendications 1 à 6, **caractérisée en ce que** le générateur de vortex (30) présente deux ailettes (38) disposées symétriquement par rapport à la direction d'écoulement de conception (36).

8. Pale de rotor d'éolienne (10) selon l'une des revendications 1 à 7, **caractérisée en ce que** la pale de rotor d'éolienne (10) présente une arête arrière fine dans la section longitudinale (32).

9. Pale de rotor d'éolienne (10) selon l'une des revendications 1 à 8, **caractérisée en ce que** la section longitudinale (32) présente une longueur mesurant au maximum 20% d'une longueur totale de la pale de rotor d'éolienne (10).

10. Pale de rotor d'éolienne (10) selon l'une des revendications 1 à 9, **caractérisée en ce que** le générateur de vortex (30) est disposé au niveau de la position longitudinale (24) présentant la longueur de corde maximale.

11. Pale de rotor d'éolienne (10) selon l'une des revendications 1 à 10, **caractérisée en ce que** la section longitudinale (32) présente un profil aérodynamique dans la région du générateur de vortex (30) et le générateur de vortex (30) est disposé entre une arête d'extrémité de profil (18) dans la direction de la corde (42) et une position de corde où le profil aérodynamique présente une épaisseur de profil maximale (44).

12. Pale de rotor d'éolienne (10) selon l'une des revendications 1 à 11, **caractérisée en ce que** la pale de rotor d'éolienne (10) présente plusieurs générateurs de vortex (30), lesquels sont disposés respectivement selon l'une des revendications précédentes.

13. Pale de rotor d'éolienne (10) selon la revendication 12, **caractérisée en ce que** les générateurs de vortex (30) sont disposés le long d'une ligne s'étendant perpendiculairement aux directions d'écoulement de conception (36) respectives.

14. Pale de rotor d'éolienne (10) selon la revendication 13, **caractérisée en ce que** la ligne s'étend le long d'un plan de profil (34) de la pale de rotor d'éolienne (10).
